(19)

Europäisches
Patentamt
European
Patent Office
Office européen
des brevets

(11)     **EP 2 572 617 B1**

(12)                                    **EUROPEAN PATENT SPECIFICATION**

(45) Date of publication and mention
of the grant of the patent:
**12.04.2017   Bulletin 2017/15**

(21) Application number: **11783721.1**

(22) Date of filing: **13.05.2011**

(51) Int Cl.:
*A47L 1/02* ^(2006.01)        *A47L 1/09* ^(2006.01)

(86) International application number:
**PCT/KR2011/003562**

(87) International publication number:
**WO 2011/145839 (24.11.2011 Gazette 2011/47)**

(54) **WINDOW-CLEANING APPARATUS, AND METHOD FOR CONTROLLING THE MOVEMENT THEREOF**

FENSTERREINIGUNGSVORRICHTUNG SOWIE VERFAHREN ZUR STEUERUNG VON DEREN BEWEGUNG

DISPOSITIF DE NETTOYAGE DE VITRE, ET PROCÉDÉ DE CONTRÔLE DU MOUVEMENT DU DISPOSITIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **15.05.2010   KR 20100045717**

(43) Date of publication of application:
**27.03.2013   Bulletin 2013/13**

(73) Proprietors:
• **Intellectual Discovery Co., Ltd.**
**144-17, Samsung-dong, Gangnam-gu,**
**Seoul (KR)**
• **Korea Institute of Robot & Convergence**
**Gyeongsangbuk-do 790-330 (KR)**

(72) Inventors:
• **RYU, Man Hyun**
**Gyeongsan-si**
**Gyeongbuk 712-060 (KR)**

• **JUNG, Kwang Mok**
**Gyeongju-si**
**Gyeongbuk 780-911 (KR)**
• **CHOI, Young Ho**
**Pohang-si**
**Gyeongbuk 465-802 (KR)**

(74) Representative: **Menges, Christian Alexander**
**Diehl & Partner GbR**
**Patent- und Rechtsanwälte**
**Erika-Mann-Straße 9**
**80636 München (DE)**

(56) References cited:
**DE-A1- 19 928 869        DE-C1- 10 245 522**
**KR-A- 20010 083 059      KR-A- 20090 017 191**
**KR-B1- 100 732 567**

**Description**

BACKGROUND OF THE INVENTION

1. Field of the Invention

The present invention relates to a window cleaning apparatus.

2. Description of the Related Art

Windows installed on the walls of a building are easily polluted by external dust and pollutants, which may degrade their appearance and lighting performance.
Therefore, it is preferable to frequently clean the windows installed on the walls of a building.
However, the outer side of the window is more difficult to clean than the inner side, and particularly, as higher buildings are increasingly constructed, cleaning the outer side of the windows may involve great risks.
A method for controlling a movement of a window cleaning apparatus comprising the features of the preamble of independent claim 1 is known from DE 102 45 522 C1. Two tactile sensors are provided on each of four sides of a window cleaning apparatus having a rectangular shape. These tactile sensors are used to measure the size of a window to be cleaned. During cleaning, movement of the window cleaning apparatus is adapted to the size of the window.
Document DE 199 28 869 A1 discloses a window cleaning apparatus consisting of an inner unit and an outer unit, the inner unit and the outer unit being coupled by magnetic force with the window to be cleaned being located between the units.

SUMMARY OF THE INVENTION

The present invention has been made in an effort to provide a window cleaning apparatus that can improve efficiency in cleaning a window, and a method of controlling a movement of the window cleaning apparatus.
The above object is solved by the combination of features of the independent claims.
Preferred embodiments are defined by the dependent claims.
An exemplary embodiment of the present invention provides a method of controlling a window cleaning apparatus which includes: controlling the window cleaning apparatus, which is attached and moved on a window, and determining a movement path of the window cleaning apparatus on the basis of the width of the window; and cleaning the window while moving the window cleaning apparatus along the determined movement path.
An exemplary embodiment of the present invention provides a window cleaning apparatus including a first cleaning unit and a second cleaning unit that are respectively attached to the inner side and the outer side of a window by a magnetic force and moved on the sides, in which at least one of the first and second cleaning units includes a control unit that determines a movement path of the window cleaning apparatus on the basis of the width of the window and allows the window cleaning apparatus to move along the determined movement path.
The method of controlling a movement may be implemented by a computer-readable recording medium where a program for executing the method in a computer is recorded.
According to an exemplary embodiment of the present invention, it is possible to effectively clean windows having various widths by determining the movement path of the window cleaning apparatus on the basis of the widths of the windows.
According to another exemplary embodiment of the present invention, a user can easily detach the window cleaning apparatus from a window, by moving the window cleaning apparatus close to the initial attachment position after cleaning.

BRIEF DESCRIPTION OF THE DRAWINGS

Fig. 1 is a perspective view briefly illustrating the configuration of a window cleaning apparatus according to an exemplary embodiment of the present invention.
Fig. 2 is a plan view illustrating the configuration of a first cleaning unit disposed on the inner side of a window, according to an exemplary embodiment.
Fig. 3 is a plan view illustrating the configuration of a second cleaning unit disposed on the outer side of a window, according to an exemplary embodiment.
Fig. 4 is a flowchart illustrating a method of controlling a movement of a window cleaning apparatus, according to an exemplary embodiment.
Fig. 5 is a view illustrating a movement path of a window cleaning apparatus, according to an exemplary embodiment.
Fig. 6 is a block diagram briefly illustrating the configuration of a movement control device in a window cleaning apparatus, according to an exemplary embodiment.
Fig. 7 is a view illustrating a method of setting a direction offset of a direction sensor in a window cleaning apparatus, according to an exemplary embodiment.
Figs. 8 and 9 are views illustrating a method of measuring the width of a window, according to an exemplary embodiment.
Fig. 10 is a view illustrating a movement path of a window cleaning apparatus, when the width of a window is not more than a reference value, according to an exemplary embodiment.
Fig. 11 is a view illustrating a movement path of a window cleaning apparatus, when the width of a window is over a reference value, according to an exemplary embodiment.

Figs. 12 and 13 are views illustrating the upward sections in the movement path of a window cleaning apparatus, according to exemplary embodiments.

Fig. 14 is a view illustrating a movement path of a window cleaning apparatus, when the width of a window is over a reference value, according to another exemplary embodiment.

Figs. 15 to 19 are views illustrating movement paths of a window cleaning apparatus, when the width of a window is over a reference value, according to other exemplary embodiments.

Figs. 20 and 21 are views illustrating methods of adjusting a horizontal offset of a window cleaning apparatus, according to exemplary embodiments.

Figs. 22 is a view illustrating a method of controlling a movement speed of a window cleaning apparatus, according to an exemplary embodiment.

Figs. 23 and 24 are views illustrating a method of finishing cleaning of a window cleaning apparatus, according to an exemplary embodiment.

Figs. 25 to 27 are views illustrating a return path of a window cleaning apparatus after cleaning, according to an exemplary embodiment

Fig. 28 is a view illustrating the configuration of a remote control device that controls a movement of a window cleaning apparatus, according to an exemplary embodiment.

DETAILED DESCRIPTION OF THE PREFERRED EMBODIMENTS

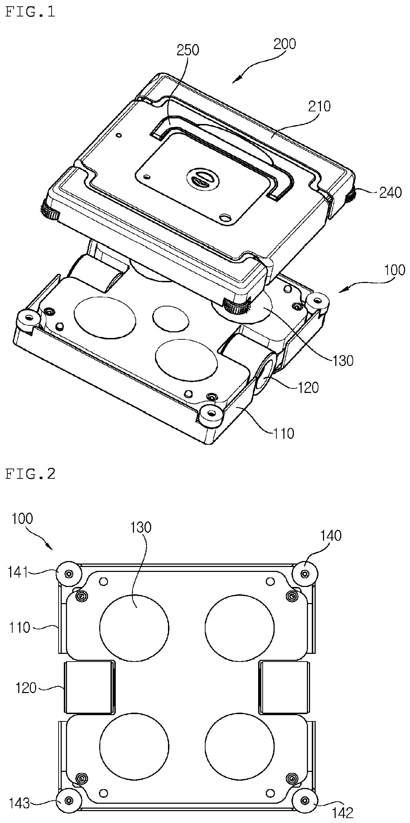

A window cleaning apparatus according to an exemplary embodiment of the present invention and a method of controlling a movement of the window cleaning apparatus are described hereafter with reference to the figures 1 to 28. The following exemplary embodiments may be modified in other ways and the scope of the exemplary embodiments is not limited to the exemplary embodiments described below. The exemplary embodiments are provided to more completely explain the present invention to those skilled in the art. Therefore, the shapes and sizes of the components in the drawings may be exaggerated for more clear explanation.

Fig. 1 is a perspective view briefly illustrating the configuration of a window cleaning apparatus according to an embodiment, the window cleaning illustrated in the figure may include two cleaning units 100 and 200, which are disposed on both sides of a window, respectively.

Referring to Fig. 1, the first cleaning unit 100 may be disposed on the inner side of a window and the second cleaning unit 200 may be disposed on the outer side of the window. In contrast, the first cleaning unit 100 may be disposed on the outer side of the window and the second cleaning unit 200 may be disposed on the inner side of the window.

The first and second cleaning units 100 and 200 may be attached opposite each other on both sides of the window, each using a magnetic module having magnetic force therein.

Further, when the first cleaning unit 100 is moved on the inner side of the window by an external or internal power source, the second cleaning unit 200 may be moved together with the first cleaning unit 100 by magnetic force between the magnetic modules of the first and second cleaning units 100 and 200.

The second cleaning unit 200 may be provided with an attachment/detachment member 250 to be easily attached/detached to/from a window, for example a handle 250, as illustrated in Fig. 1, and the first cleaning unit 100 may also be provided with an attachment/detachment member (not shown) corresponding to the attachment/detachment member 250 to be easily attached/detached.

Accordingly, a user can attach the window cleaning apparatus to a window, using the attachment/detachment members of the first and second cleaning units 100 and 200, that is, the handles, and detach the first and second cleaning units 100 and 200 from the window, using the handles after cleaning.

The window cleaning apparatus according to an exemplary embodiment of the present invention may further include a remote controller (not shown) for a user to control the operations of the first and second cleaning units 100 and 200.

As described above, the second cleaning unit 200 is passively moved by the magnetic force with the movement of the first cleaning unit 100 and a user can control the operation of a window cleaning apparatus composed of the first and second cleaning units 100 and 200 by controlling the movement of the first cleaning unit 100, using the remote controller.

Although a wireless type remote controller is exemplified in the exemplary embodiment for the convenience of a user, a wire type remote controller may be used or the window cleaning apparatus may be manually controlled by a user.

On the other hand, the window cleaning apparatus according to an exemplary embodiment of the present invention, in detail, the first cleaning unit 100 disposed on the inner side of a window may move along a predetermined movement path or may be equipped with a sensor (not shown), which detects dust, and move while determining a movement path that can improve cleaning efficiency.

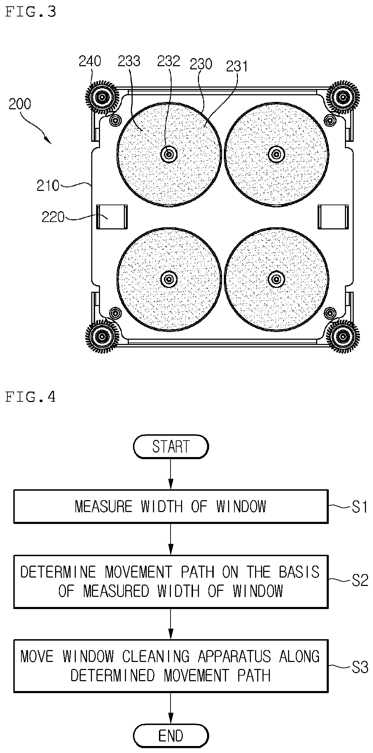

Hereinafter, the first and second cleaning units 100 and 200 will be described in more detail with reference to Figs. 2 and 3.

Fig. 2 is a plan view illustrating the configuration of the first cleaning unit 100, that is, the configuration of the top to be brought in contact with a window, in both sides of the first cleaning unit 100.

Referring to Fig. 2, the first cleaning unit 100 may include a first frame 110, a plurality of first wheel members 120, and a plurality of first magnetic modules 130. The first frame 110 constitutes the body of the first cleaning unit 100, and the first wheel members 120 and the first magnetic modules 130 may be connected and fixed to the first frame 110.

Shock-absorbing members 140 to 143 may be disposed at the edge of the first frame 110 to minimize a shock when the window cleaning apparatus collides with a protruding structure such as the frame of a window while moving. Sensors (not shown) are connected to the buffer members 140 to 143, respectively, and when the sensors sense a shock, the first cleaning unit 100 can change the movement path. For example , as illustrated in Fig. 2, the shock-absorbing members 140 to 143 may be disposed at four corners of the first cleaning unit 100 , respectively, and the connected sensors (not shown) can recognize that the first cleaning unit 100 has collided with the frame of a window by sensing a shock.

In detail, while the window cleaning apparatus moves, when two shock-absorbing members 140 and 141 at one side of the first cleaning unit 100 sense a shock, it is recognized that the side with the shock-absorbing members 140 and 141 in the sides of the first cleaning unit 100 has collided with the frame of a window.

Although the first frame 110 of the first cleaning unit 100 has a rectangular cross-section in the exemplary embodiment, it does not limit the present invention, as an example, and may be implemented in various shapes such as a circular or polygonal cross-section.

The first cleaning unit 100 may include the first magnetic modules 130, which generate magnetic force such that the first and second cleaning units 100 and 200 can be attached to both sides of a window.

For example, the first magnetic modules 130 may include a permanent magnet such as a neodium magnet, so that the first magnetic modules 130 can generate magnetic force together with second magnetic modules 233 of the second cleaning unit 200.

In more detail, the first magnetic modules 130 of the first cleaning unit 100 may include a magnet having a pole opposite to that of a magnet of the second magnetic modules 233 provided to the second cleaning unit 200, so that the first and second cleaning units 100 and 200 disposed on both surfaces of a window can attract each other with magnetic force. Accordingly, the first and second cleaning units 100 and 200 can be attached to the window, and be moved together.

According to another exemplary embodiment of the present invention, the magnetic modules 130 and 233 may include electromagnets, not the permanent magnets, or may include permanent magnets and electromagnets, as another exemplary embodiment.

The window cleaning apparatus according to an exemplary embodiment of the present invention is not limited to the configuration including the first and second magnetic modules 130 and 233, and may include any configuration, provided that the first and second cleaning units 100 and 200 can be attached and moved on a window there between.

For example, one of the first and second cleaning units 100 and 200 may include a magnetic body such as a permanent magnet or an electromagnet and the other may include a metal body that can be attracted by magnetic force of the magnetic body.

As illustrated in Fig. 2, the first magnetic modules 130 may be implemented by four discs and may be disposed on the top, which is attached to a window, of the first cleaning unit 100.

The first magnetic modules 130 may be exposed toward the window, or may be disposed close to the top of the first cleaning unit 100 by specific cover members.

Further, two or more first wheel members 120 may be provided at the left and right sides of the first cleaning unit 100 to be partially exposed above the first frame 110, for example, as illustrated in Fig. 2, two wheel members may be disposed at the left and right sides of the first cleaning unit 100, respectively, or four wheel members may be disposed at the corners, respectively.

For example, the first wheel members 120 may be rotated by a driving unit (not shown) such as a motor disposed inside the first frame 110. The first cleaning unit 100 can be moved in a predetermined direction on a window by the rotation of the first wheel members 120. The first cleaning unit 100 may not only move straight, but move along a curve, that is, may change the movement direction. For example, it is possible to change the movement direction of the first cleaning unit 100 by changing the rotational axes of the first wheel members 120 or rotating the two first wheel members 120 at the left and right sides, respectively, at different speeds.

The surfaces of the first wheel members 120 may be made of, for example, fabric or rubber to generate predetermined frictional force against a window in rotating, and accordingly, the first cleaning unit 100 can easily move on the inner side of a window without idling. Further, the surfaces of the first wheel members 120 may be made of a material that does not scratch a window in rotating.

When the first cleaning unit 100 is attached to a of a window by magnetic force of the first magnetic modules 130, reaction force perpendicular to the window may be applied to the first wheel members 120. Therefore, as the first wheel members 120 are rotated by the driving unit such as a motor, the first cleaning unit 100 can be moved on the inner side of a window by frictional force.

Further, as the first cleaning unit 100 is moved by the rotation of the first wheel members 120, the second cleaning unit 200 attached to the opposite side, that is, the outer side of the window, can clean the window while moved together with the first cleaning unit 100 by the magnetic force.

Fig. 3 is a plan view illustrating the configuration of the second cleaning unit 200 according to an exemplary embodiment, that is, the configuration of the bottom to be brought in contact with a window, in both sides of the second cleaning unit 200.

Referring to Fig. 3, the second cleaning unit 200 may include a second frame 210, a plurality of second wheel members 220, and a plurality of cleaning modules 230.

The second frame 210 may constitute a body of the second cleaning unit 200 and may be implemented in a plate structure having a shape corresponding to that of the first frame 110 described above, for example, a rectangular cross-section.

Further, the second wheel members 220 are disposed on the bottom of the second frame 210 such that the second cleaning unit 200 can be moved by magnetic force with the movement of the first cleaning unit 100.

According to an exemplary embodiment, unlike the first wheel members 120, the second wheel members 220 may be connected not to a driving unit such as a motor, but to the second frame 210 by shafts to smoothly rotate with the movement of the second cleaning member 200

Accordingly, when the second cleaning unit 200 is moved together with the first cleaning unit 100 by magnetic force, the second wheel members 220 may perform function similar to that of a bearing, by rotating.

Although the second wheel members 220 are formed a cylindrical shape in Fig. 3, the present invention is not limited thereto, and for example, the second wheel members 220 may be implemented by a spherical member such as a ball bearing.

The cleaning modules 230 are disposed on the bottom of the second frame 210 to be exposed to the outside, such that they can clean a side of a window, for example, the outer side where the second cleaning unit 200 is attached.

As illustrated in Fig. 3, each of the cleaning modules 230 may include a plurality of modules, for example, a cleaning pad 231, a second magnetic module 232, and a detergent ejection port 232, and may be implemented by four discs corresponding to the first magnetic modules 130 of the first cleaning unit 100.

Each of the four discs of the cleaning modules 230 may be rotated by a driving unit (not shown) such as a motor (not shown). Further, the cleaning modules 230 may protrude from a bottom surface of the second frame 210, at a predetermined distance, such that when attached to a window, the second cleaning unit 200 can clean the outer side of the window, using frictional force due to rotation of the cleaning modules 230.

A pad 231 made of fabric or rubber may be attached to the exposed surface of the cleaning module 230 such that foreign materials can be easily removed from the window by the frictional force in rotating. In this case, the pad 231 may be made of a material having a micro tip structure or porous structure to improve cleaning performance of the window cleaning apparatus.

Further, the cleaning module 230 may have the detergent ejection port 232 for ejecting a detergent, and for example, the detergent ejection port 232 may be connected with a detergent container (not shown) and a pump (not shown) in the second cleaning unit 200, through a specific channel to be supplied with a detergent. Therefore, when cleaning a window, the cleaning module 230 can clean the window while ejecting a detergent onto the window through the detergent ejection port 232.

The second magnetic module 233 may be disposed to overlap the inside of the cleaning module 230, that is, the bottom of the pad 231. The second magnetic module 233 has a shape corresponding to that of the first magnetic module 233 of the first cleaning unit 100 and generates magnetic force such that the first and second cleaning units 100 and 200 can be attached to both sides of a window.

The second magnetic module 233 may be implemented by a magnetic body or metal body such as a permanent magnet or an electromagnet, and accordingly, the first and second cleaning units 100 and 200 respectively on both sides of a window can be attached and moved on the window by being attracted to each other by the magnetic force.

For example, the cleaning module 230 may be disposed to correspond to the first magnetic module 130, and the second magnetic module 233 implemented by a neodium magnet having a polarity opposite to that of the first magnetic module 130 may be disposed inside the cleaning module 230.

Therefore, not only the first and second cleaning units 100 and 200 can be attached to both sides of the window by the magnetic force between the first magnetic module 130 and the second magnetic module 233 of the cleaning module 230, but the first and second cleaning units 100 and 200 can be integrally moved.

Further, a force is continuously applied, toward the window, to the cleaning module 230 by the magnetic force between the first and second magnetic modules 130 and 233 and the frictional force on the window correspondingly increases, when the cleaning module 230 rotates, such that the cleaning performance can be improved.

Referring to Fig. 3, a plurality of sub-cleaning modules 240 may be disposed at the corners of the second cleaning unit 200. Since the cleaning module 230 is disposed inside the second frame 210 and may be difficult to clean the edge of a window, the second cleaning unit 200 is provided with the sub-cleaning modules 240 to more easily clean the edge of the window.

The sub-cleaning modules 240 each include a roller member (not shown) which is rotatably installed and a brush may be disposed around the surface of the roller member. Therefore, the sub-cleaning modules 240 can remove foreign materials around the window frame while rotated by the frictional force against the window frame, when the second cleaning unit 200 moves along the window frame.

Further, the sub-cleaning modules 240 may perform the same function as that of the shock-absorbing members 140 of the first cleaning unit 100, that is, may minimize a shock and senses the shock, using a sensor provided therein, when the window cleaning apparatus collides with a protruding structure such as a window frame.

Although the configuration of the window cleaning apparatus according to an exemplary embodiment of the present invention was described above with reference to Figs. 1 to 3, by exemplifying the window cleaning apparatus cleaning only one side of a window, for example, the outer side of a window, this is only an exemplary embodiment of the present invention and the present invention is not limited thereto.

For example, the first cleaning unit 100 may also be provided with the cleaning modules 230 of the second cleaning unit 200, and accordingly, the window cleaning apparatus may simultaneously clean both sides of a window.

According to an exemplary embodiment of the present invention, the window cleaning apparatus that is attached to a window and cleans the window while moving on the window can determine a movement path on the basis of the window to clean and can clean the window while moving along the determined movement path.

Fig. 4 is a flowchart illustrating a method of controlling a movement of a window cleaning apparatus according to an exemplary embodiment of the present invention and the method of controlling a movement may be performed by at least one of the first cleaning unit 100 and the second cleaning unit 200 of the window cleaning apparatus.

For example, a control unit (not shown) that is disposed in the first cleaning unit, which is disposed on the inner side of a window and allows the window cleaning apparatus to move, in the first and second cleaning units 100 and 200 may perform the method of controlling a movement illustrated in Fig. 4.

Referring to Fig. 4, the control unit in the window cleaning apparatus measures the width of a window (step S1) and determines the movement path of the window cleaning apparatus on the basis of the measured width of the window (step S2).

For example, the control unit can measure the width of a window to clean by moving the window cleaning apparatus attached on the window by a user to the left and right and can determine different movement paths of the window cleaning apparatus in accordance with the measured width of a window.

When the movement path of the window cleaning apparatus is determined, as described above, the control unit moves the window cleaning apparatus along the determined movement path (step S3).

That is, the window cleaning apparatus according to an exemplary embodiment of the present invention can clean a window while moving along a movement path that is determined on the basis of the width of the window, as described above.

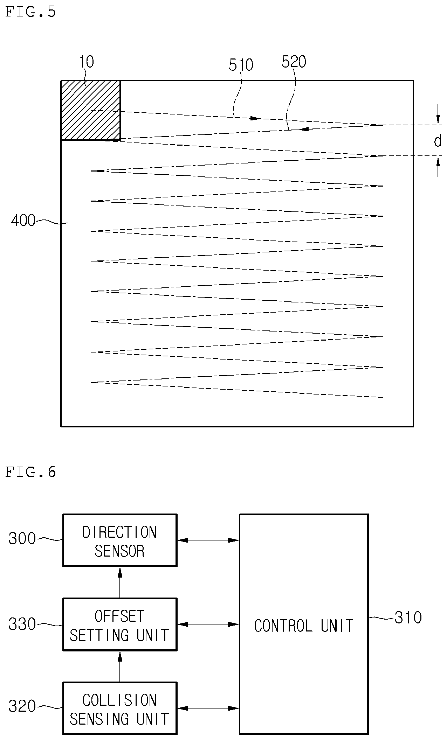

Fig. 5 is a view illustrating a movement path of a window cleaning apparatus, according to an exemplary embodiment of the present invention.

Referring to Fig. 5, the window cleaning apparatus 10 can repeatedly move along the first section from one side to the other side of a window 400 and along a second section from the other side to one side, to clean the window 400.

For example, the movement path of the window cleaning apparatus 10 has a right-downward section 510 from the left end to the right end, moving right, and a left-downward section 520 from the right end to the left end, moving left, and as illustrated in Fig. 5, the right-downward section 510 and the left-downward section 520 may be alternately repeated.

The angle of the window cleaning apparatus 10 moving between the right-downward section 510 and the left-downward section 520 may depend on the vertical distance d of the movement paths, that is, the distance between the positions of two adjacent ends in the movement path of the window cleaning apparatus.

For example, the downward movement angle of the window cleaning apparatus 100 may be increased to increase the vertical distance d of the movement path, such that it is possible to more carefully clean the window, but it may take more time to clean the window.

In contrast, the downward movement angle of the window cleaning apparatus 100 may be decreased to decrease the vertical distance d of the movement path, such that it takes less time to clean the window, but the window may not be carefully cleaned.

Further, the vertical distance d of the movement path may be set in advance to a predetermined value, for example, a half the size s of the window cleaning apparatus 10, and a user can change, that is, increase or decrease the vertical distance d of the movement path in accordance with a desired the necessary cleaning time or the detailed degree of cleaning.

The window cleaning apparatus 10 may be slid down by the gravity while moving right or left, such that the window cleaning apparatus 10 may move with a downward angle larger than the predetermined value due to the drop.

The degree of drop of the window cleaning apparatus 10 due to the gravity may be changed on the basis of the width w of the window 400.

That is, as the width w of the window 400 increases, the degree of drop of the window cleaning apparatus 10 may increase, and the change of the degree of drop of the window cleaning apparatus 10 may change the vertical distance d of the movement path.

For example, as the width w of the window 400 increases, the drop distance of the window cleaning apparatus 10 may increase and the vertical distance d of the movement path may correspondingly increase.

When the vertical distance d of the movement path is changed, as described above, for example, when the vertical distance d of the movement path increases, the window 400 may be cleaned less carefully than that the user wants.

According to an exemplary embodiment of the present invention, it is possible to compensate for the drop of the window cleaning apparatus 10 due to the gravity by determining the movement path of the window cleaning apparatus 10 on the basis of the width w of the window 400, such that it is possible to maintain the vertical distance d of the movement path at a predetermined value, for example, a half the size s of the window cleaning apparatus 10 or a value set by the user.

The method of controlling a movement of the window cleaning apparatus 10 may be applied to a window cleaning apparatus having the configuration described with reference to Figs. 1 to 3.

In the configuration, the first cleaning unit 100 attached to the inner side of the window 400, in the first and second cleaning units 100 and 200 of the window cleaning apparatus, may move along the movement path, which is determined as described above, and the second cleaning unit 200 attached to the outer side of the window 400 may bay moved by the magnetic force with the movement of the first cleaning unit 100.

Fig. 6 is a block diagram illustrating a movement control device of a window cleaning apparatus according to an exemplary embodiment of the present invention, in which the movement control device may include a direction sensor 300, a control unit 310, and a collision sensing unit 320.

Referring to Fig. 6, the direction sensor 300 can detect a movement direction of the window cleaning apparatus.

The direction sensor 300, a device that senses a physical change of the external environment and converts the change into an electric signal, senses physical quantities such as the inclination and acceleration of an object and converts the quantities into electric signals.

For example, the direction sensor 300 may be implemented by an acceleration sensor that senses acceleration of an object and converts the acceleration into an electric signal, and the acceleration sensor may a sensor using a piezo-resistor or capacitance.

In more detail, as for the acceleration sensor uses capacitance, in an acceleration motion, the position of an inner mass in the acceleration sensor changes, the overlap area of the mass and a sensing electrode is changed by the displacement of the inner mass, and the capacitance between the electrodes is changed by the change of the area, such that the acceleration can be measured by measuring the change of the capacitance.

The direction sensor 300 including the acceleration sensor can detect the movement direction of the window cleaning apparatus according to an exemplary embodiment of the present invention, about predetermined reference axes (e.g., a horizontal x axis and a vertical y axis).

The direction sensor 300 may be provided in at least one of the first and second cleaning units 100 and 200 described with reference to Figs. 1 to 3, and according to an exemplary embodiment of the present invention, the direction sensor 300 may be provided in the first cleaning unit 100 that is attached to the inner side of a window and allows the window cleaning apparatus to move.

In this configuration, the direction sensor 300 disposed in the first cleaning unit 100 may detect the movement direction of the first cleaning unit 100, using the acceleration sensor described above.

Although a window cleaning apparatus according to an exemplary embodiment of the present invention was described above by exemplifying the direction sensor 300 detecting the movement direction of the window cleaning apparatus by using an acceleration sensor, the present invention is not limited thereto and various sensors that can recognize the movement direction of the window cleaning apparatus, other than the acceleration sensor, may be used.

The control unit 310 may control a movement of the window cleaning apparatus according to an exemplary embodiment of the present invention, on the basis of the movement direction of the window cleaning apparatus which is detected by the direction sensor 300.

For example, the control unit 310 may be disposed in the first cleaning unit 100 and control rotation of the first wheel members 120 described with reference to Fig. 2, and may include a driving unit (not shown) that operates the motors connected to the first wheel members 120, for the control.

In more detail, the control unit 310 may control the first cleaning unit 100 to move in a desired direction at a desired speed by adjusting the voltage (or current) supplied to the motors connected to the first wheel members 120, and the movement direction of the first cleaning unit 100 may be controlled on the basis of the movement direction of the window cleaning apparatus which is detected by the direction sensor 300.

That is, the control unit 310 may change the movement direction of the first cleaning unit 100 such that the movement direction of the window cleaning apparatus gets close to the desired direction, by comparing the desired direction with the present movement direction of the window cleaning apparatus which is detected by the direction sensor 300, and for this operation, the control unit 310 may periodically check the direction detected by the direction sensor 300.

The control unit 310 may include a circuit unit (not shown) that performs the function described above and the circuit unit may be may be implemented by PCB (Printed Circuit Board).

The collision sensing unit 320 can sense a collision of the window cleaning apparatus, and for this operation, the collision sensing unit 320 may include a plurality of shock sensors (not shown) that can sense a shock.

For example, the collision sensing unit 320 may be provided in the first cleaning unit 100 and sense that the first cleaning unit 100 collides with the frame of a window.

For this operation, the collision sensing unit 320 may include the shock-absorbing members 140 to 143 disposed at the corners of the first cleaning unit 100, as illustrated in Fig. 2, and the shock-absorbing members 140 to 143 may sense a shock due to collision with the frame of a window, using the shock sensors.

On the other hand, the control unit 310 may control the window cleaning apparatus 10 to move along the predetermined movement pattern described with reference to Fig. 5, by controlling the movement direction of the window cleaning apparatus 10 which is detected by the direction sensor 300.

Further, according to an exemplary embodiment of the present invention, the control unit 310 in the window cleaning apparatus 10 may determine the movement path of the window cleaning apparatus on the basis of the width of a window and control the window cleaning apparatus 10 to move along the determined movement path.

However, when a direction offset of the direction sensor 300 is not correctly set, that is, when the reference axes set in the direction sensor 300 does not coincide with the actual horizontal/vertical directions, the movement direction of the window cleaning apparatus 10 which is detected by the direction sensor 300 may not coincide with the actual direction.

In this case, the movement path of the window cleaning apparatus 10 controlled by the control unit 310 may not coincide with the predetermined movement path, which may deteriorate the cleaning performance or causes malfunction of the window cleaning apparatus 10.

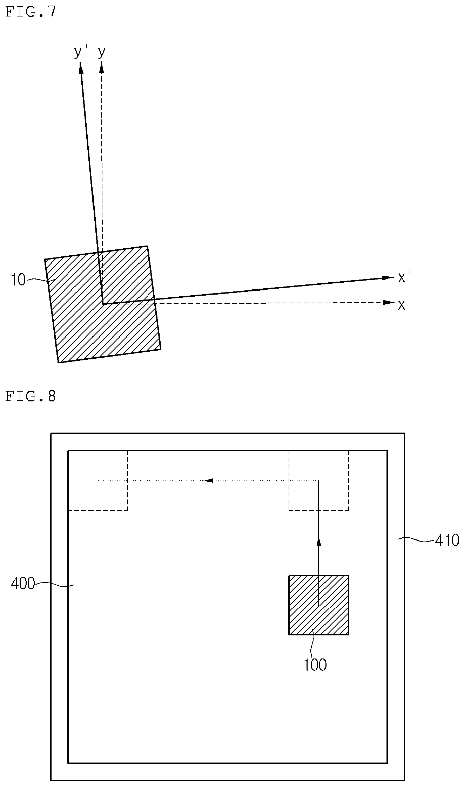

The problems when the direction offset of the direction sensor is not correctly set are described in detail with reference to Fig. 7. The horizontal reference axis x' and the vertical reference axis y' set in the direction sensor 300 may not coincide with the actual horizontal axis x and a real vertical axis y, and the error in setting the direction offset may be caused by a model deviation of the direction sensor 300, a mechanical assembly difference, or a change in internal/external temperature.

For example, when the control unit 310 moves the window cleaning apparatus 10 horizontally to the right (in the direction of x axis), the window cleaning apparatus 10 moves actually slightly upward (the direction of x' axis) from the horizontal direction due to the error in setting the direction offset.

Therefore, it may be required to correctly set the direction offset of the direction sensor 300 (make the horizontal/vertical reference axes x' and y' coincide with the actual horizontal/vertical axes x and y as illustrated in Fig. 7) in order to prevent the error in the movement direction due to the error in setting the direction offset of the direction sensor 300.

For this work, the window cleaning apparatus 10 according to an exemplary embodiment of the present invention may further includes an offset setting unit 330 that sets the direction offset of the direction sensor 300. For example, when the window cleaning apparatus 10 collides with the frame of a window, the offset setting unit 330 may reset the direction offset of the direction sensor 300 in response to a signal inputted from the collision sensing unit 320.

Hereinafter, the method of controlling a movement of the window cleaning apparatus 10 will now be described in more detail with reference to Figs. 8 to 28.

It is exemplified in the following direction that the first cleaning unit 100 to be attached to the inner side of the window 400 in the first and second cleaning units 100 and 200 in the window cleaning apparatus 10, as described above, is moved by the method of controlling a movement according to an exemplary embodiment of the present invention.

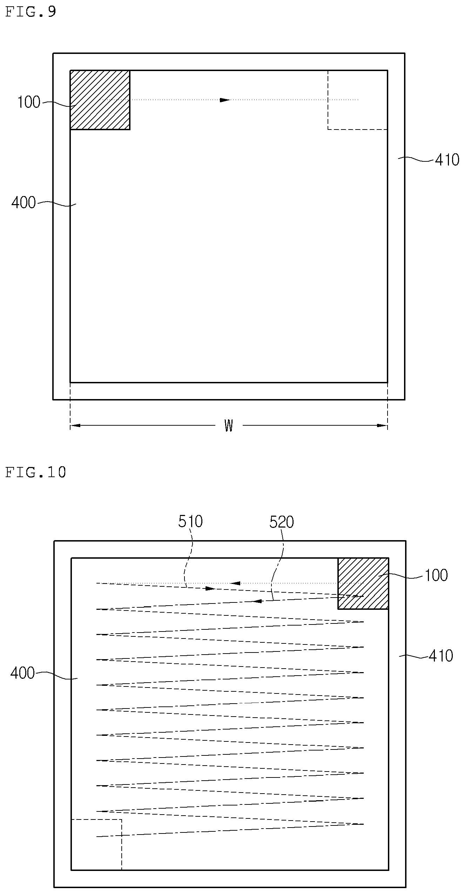

Figs. 8 and 9 are views illustrating a method of measuring the width of a window, according to an exemplary embodiment.

Referring to Fig. 8, a frame 410 for fixing the window 400 may be disposed around the window 400, such that the window cleaning apparatus 10 may collide with the frame 410 when moving to one side end of the window 410.

According to an exemplary embodiment of the present invention, when a user give an instruction to start cleaning after attaching the window cleaning apparatus 10 to the window 400, the window cleaning apparatus 10, in detail, the first cleaning unit 100 attached on the inner side of the window 400 moves up from the attached position.

For example, the first cleaning unit 100 can vertically move up to the top of the window from the attached position, and it is possible to determine that the first cleaning unit 100 has moved to the top of the window, when the shock-absorbing members of the first cleaning unit 100 collide with the top of the frame 410.

In detail, when the upper bumper collides with the frame 410 and pressure from the upper portion is sensed by the sensor while the first cleaning unit 100 vertically moves up, the first unit 100 may stop moving up.

Meanwhile, while the first cleaning unit 100 vertically moves up, the detergent is ejected through the detergent ejection port 231 of the second cleaning unit 200, such that the pads 231 of the cleaning modules 230 get wet.

Thereafter, the first cleaning unit 100 can horizontally move left to the right end of the window, and it is possible to determine that the first cleaning unit 100 has moved to the right end of the window, when the shock-absorbing members of the first cleaning unit 100 collide with the right side of the frame 410.

In detail, when the bumper collides with the frame 410 and pressure from the right side is sensed by the sensor while the first cleaning unit 100 horizontally moves left, the first unit 100 may stop moving left.

The first cleaning unit 100 can move to the top left side of the window 400 after attached by the user, by moving as described above.

Referring to Fig. 9, the first cleaning unit 100 can horizontally move right from the top left end to the top right end of the window 400, and it is possible to determine that the first cleaning unit 100 has moved to the right end of the window, when the shock-absorbing members of the first cleaning unit 100 collide with the right side of the frame 410.

In detail, when the bumper collides with the frame 410 and pressure from the right side is sensed by the sensor while the first cleaning unit 100 horizontally moves right, the first unit 100 may stop moving right.

As illustrated in Fig. 9, as the first cleaning unit 100 moves from the top left side to the top right side of the window 400, the width w of the window 400 can be measured, and for example, the width w of the window 400 may be measured by the amount of rotation of the first wheel members 120 of the first cleaning unit 100.

According to an exemplary embodiment of the present invention, the movement path of the window cleaning apparatus 10, in detail, the first cleaning unit 100 may be determined on the basis of the measured width w, after the width w of the window 400 is measured.

For example, when the measured width w of the window 400 is a predetermined reference value or less, the path illustrated in Fig. 5, that is, the movement path may be set such that the right-downward sections 510 and the left-downward sections 520 are alternately repeated.

On the other hand, when the measured width w of the window 400 is larger than the reference value, the it is possible to compensate the drop of the window cleaning apparatus 10 due to the gravity by including a right or left upward section in the movement path.

Although it is exemplified in the exemplary embodiment to measuring the width w of the window 400 by moving the window cleaning apparatus 100 with reference to Figs. 8 and 9, the present invention is not limited thereto and the width w of the window 400 may be inputted by a user.

According to another exemplary embodiment of the present invention, the initial attachment position of the window cleaning apparatus 10 may be detected by the process of measuring the width of a window which was described with reference to Figs. 8 and 9.

Referring to Fig. 8, a first movement distance m1 may be measured while the first cleaning unit 100 horizontally moves left, and for example, the first movement distance m1 may be measured on the basis of the amount of rotation of the first wheel members 120 of the first cleaning unit 100.

Further, referring to Fig. 9, a second movement distance m2 may be measured while the first cleaning unit 100 is moved from the top left end to the top right end of the window 400, and for example, the second movement distance m2 may be measured on the basis of the amount of rotation of the first wheel members 120 of the first cleaning unit 100.

According to an exemplary embodiment of the present invention, after the first movement distance m1 and the second movement distance m2 are measured, the initial attachment position of the window cleaning apparatus can be found by comparing the first and second movement distances m1 and m2.

In the cases illustrated in Figs. 8 and 9 , since the first movement distance m1 is lager that a half the second movement distance m2, it may be determined that the initial attachment position of the window cleaning apparatus is at the right side on the window 400.

Therefore, after cleaning, the window cleaning apparatus, that is, the first cleaning unit 100 may move to and stay at the right end of the window 400, and accordingly, the user can easily detach the first and second cleaning units 100 and 200 from the window 400.

In contrast, when the first movement distance m1 is smaller than a half the second movement distance m2, it may be determined that the initial attachment position of the window cleaning apparatus is at the left side on the window 400, such that the first cleaning unit 100 may move to and stay at the left end of the window 400, after cleaning.

Further, the method of setting an offset of the direction sensor 300 may be performed, when the first cleaning unit 100 collides with the frame 410, in the movement path illustrated in Figs. 8 and 9.

For example, the vertical offset of the direction sensor 300 may be reset, when the first cleaning unit 100 collides with the top of the frame 410 of the window 400 (A1), and the horizontal offset of the direction sensor 300 may be reset on the basis of the reset vertical offset.

That is, the horizontal offset may be reset by adjusting the horizontal reference axis x' illustrated in Fig. 7 to coincide with the actual horizontal axis x, and the vertical offset may be reset by adjusting the vertical reference axis y' of the direction sensor 300 to be perpendicular to the adjusted horizontal reference axis x'.

Further, the horizontal offset of the direction sensor may be reset, when the first cleaning unit 100 collides with the left side of the frame 410 of the window 400 (A2).

Further, the horizontal offset of the direction sensor 300 may be reset, when the first cleaning unit 100 collides with the right side of the frame 410 of the window 400 (A3), and the vertical offset of the direction sensor 300 may be reset on the basis of the reset horizontal offset.

Fig. 10 is a view illustrating a movement path of a window cleaning apparatus, when the width of a window is not more than a reference value, according to an exemplary embodiment.

Referring to Fig. 10, when the width w of the window 400 is not more than a reference value, for example, 1m, the first cleaning unit 100 can horizontally move to the left end of the window 400.

As the first cleaning unit 100 horizontally moves right, as illustrated in Fig. 7, and then horizontally moves left, as illustrated in Fig. 10, the portion close to the top of the window 400 can be cleaned two times, such that dusts around the frame 410 can be more completely removed.

The first cleaning unit 100 moves right and down to the right end of the window 400 after moving to the top left end of the window 400, and then moves left and down to the left end of the window 400.

That is, when the width w of the window 400 is not more than the reference value of 1m, the first cleaning unit 100 can repeatedly move alternately along the right-downward section 510 and the left-downward section 520, as described above.

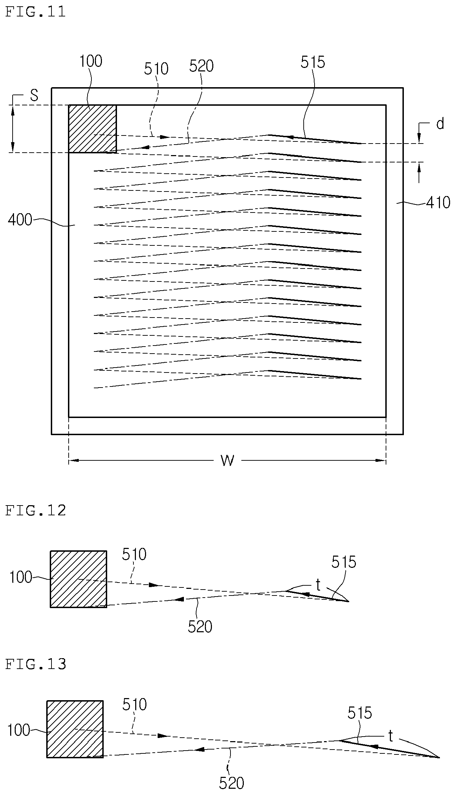

Fig. 11 is a view illustrating a movement path of a window cleaning apparatus, when the width of a window is larger than a reference value, according to an exemplary embodiment.

Referring to Fig. 11, when the width w of the window 400 is larger than a reference value, for example, 1m, the movement path of the window cleaning deice 10, in detail, the first cleaning unit 100 may include an upward section 515 for moving up in a specific direction.

For example, the first cleaning unit 100 at the top left end of the window 400 moves right and down to the right end of the window 400, keeps moving left and up for a predetermined time, and then move left and down to the left end of the window 400.

That is, when the width w of the window 400 is larger than the reference value of 1m, the first cleaning unit 100 can sequentially and repeatedly move along the right-downward section 510, the left-upward section 515, and the left-downward section 520.

Since the movement path of the first cleaning unit 100 includes the upward section 515, as described above, it is possible to compensate for the drop of the window cleaning apparatus 10 due to the width w of the window 400 which is larger than the reference value, such that it is possible to maintain the vertical distance d of the movement path at a predetermined value, for example, a half the size s of the window cleaning apparatus or a value set by the user.

Figs. 12 and 13 are views illustrating the upward sections in the movement path of a window cleaning apparatus, according to exemplary embodiments.

Referring to Fig. 12, when the width w of the window 400 is larger than a reference value, the movement path of the first cleaning unit 100 may include a series of the right-downward ward section 510, the left-upward ward section 515, and the left-downward ward section 520, and the first cleaning unit 100 may move left and up for a predetermined time t in the left-upward ward section 515.

The movement time t in the left-upward ward section 515 may be set in accordance with the width of the window 400, and it is possible to effectively compensate for the drop of the window cleaning apparatus 100 by setting the movement time t in the left-upward ward section 515 to increase with an increase of the width w of the window 400, for example.

That is, the larger the width w of the window 400, the larger the drop distance of the window cleaning apparatus 10 may be, and when the movement time t in the left-upward ward section 515 increases, the upward movement distance of the first cleaning unit 100 increases, under the assumption that the upward movement angle is constant, such that the increased drop distance can be compensated.

According to an exemplary embodiment of the present invention, the movement time t in the left-upward ward section 515 may be set to be proportioned to the difference between the width w of the window 400 and the reference value (for example, 1m).

For example, the movement time t in the left-upward ward section 515 may be calculated from the following Formula 1, on the basis of the width w of the window 400.

$$[\text{Formula 1}]$$
$$t = k \ (w - r)$$

where, r is a reference value for the width w of the window 400, and for example, may be 1m, and k is a proportional constant.

According to another exemplary embodiment of the present invention, it is possible to match the width w of the window 400 with the movement time t in the left-upward ward section 515 in a lookup table and store the lookup table in the window cleaning apparatus 10, such that the movement time t in the left-upward ward section 515 may be obtained from the lookup table in accordance with the measured width w of the window 400.

Referring to Fig. 13, as the width w of the window 400 increases, the movement time t in the left-upward ward section 515 where the first cleaning unit 100 moves left and up, such that the movement distance in the left-upward ward section 515 can be increased.

In the movement path illustrated in Figs. 10 and 11, the horizontal offset of the direction sensor 300 may be reset, when the first cleaning unit 100 that moves down to the left collides with the left vertical side of the frame 410.

Further, , the horizontal offset of the direction sensor 300 may be reset, when the first cleaning unit 100 that moves down to the right collides with the right vertical side of the frame 410.

The horizontal offset may be reset whenever the first cleaning unit 100 collides with the frame 410 while moving along the movement path illustrated in Fig. 10 or Fig. 11, or by a predetermined period T.

For example, when the period of resetting the direction offset is set to 100 seconds, the offset setting unit 330 counts time from when the direction offset of the direction sensor 300 is reset, and when the counted time reaches 100 seconds, the horizontal offset of the direction sensor 300 may be reset, when the first cleaning unit 100 collides with a window frame first after the 100 seconds.

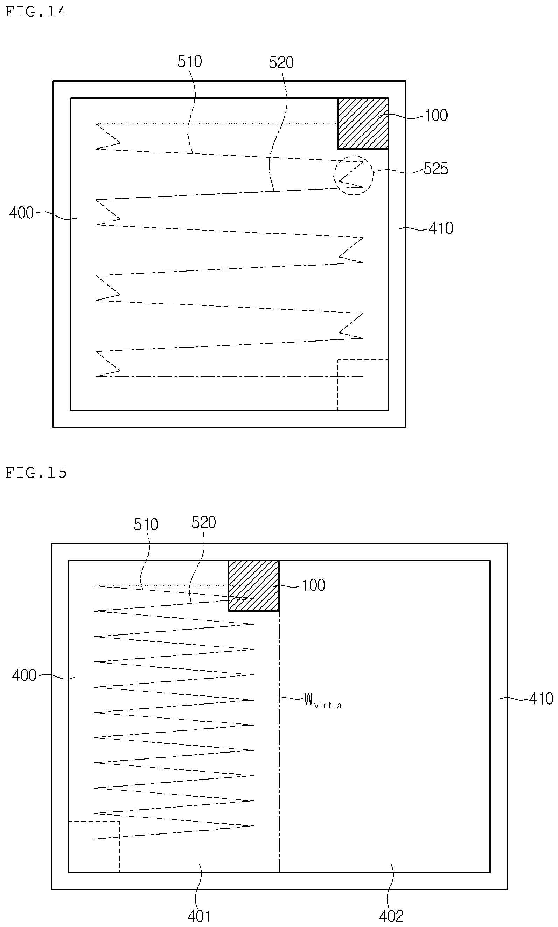

Fig. 14 is a view illustrating a movement path of a window cleaning apparatus, when the width of a window is larger than a reference value, according to an exemplary embodiment.

Referring to Fig. 14, when the width w of the window 400 is larger than a reference value, for example, 1m, the movement path of the window cleaning deice 10, in detail, the first cleaning unit 100 may have a pattern close to the shape of "⇄".

For example, the movement pattern illustrated in Fig. 14 may include a right section 530 where the first cleaning unit 100 moves from the left end to the right end of the window 400, a left section 540 where the first cleaning unit 100 moves from the right end to the left end, and a gap-keeping section 535 where the first cleaning unit 100 moves away from the right or left end of the window by a predetermined distance between the right section 530 and the left section 540 and then returns to the end.

In this case, it is possible to control the movement direction such that the first cleaning unit 100 horizontally move right or left without sliding down in the right section 530 or the left section 540 and the vertical distance d of the movement path (that is, the cleaning gap of the window cleaning apparatus 10) may b maintained by the gap-keeping section 535, as illustrated in Fig. 14.

Further, the movement path illustrated in Fig. 14 may be applied to a window of which the width w is in the range between predetermined first reference value and second reference value, for example, medium and large windows having a width w between 1m and 2m.

Further, the movement path having the same pattern regardless of the width w of the window 400 may be used, because the first cleaning unit 100 does not drop in the right section 530 and the left section 540.

According to another exemplary embodiment of the present invention, the movement path of the window cleaning apparatus 100, in detail, the first cleaning unit 100 may separate the window 400 into two or more regions, and the first cleaning device 100 may move in each of the separate regions.

Figs. 15 to 19 are views illustrating movement paths of a window cleaning apparatus, when the width of a window is over a reference value, according to other embodiments.

Referring to Fig. 15, when the width w of the window 400 is larger than a reference value, for example, 1m, the movement path of the window cleaning apparatus 10, in detail, the first cleaning unit 100 may include a left movement path for cleaning the left region 410 of the window 400 and a right movement path for cleaning the right region 402 of the window 400.

That is, the window 400 is divided into the left region 401 and the right region 402 by a virtual frame Wvirtual and the first cleaning unit 100 may clean any one of the separate left region 401 and right region 402 while moving, and then may clean the other region while moving.

The movement paths of the first cleaning unit 100 moving in the left region 401 and the right region 402 of the window may be implemented in various ways such as the movement paths described with reference to Figs. 10 to 14, in which the virtual frame Wvirtual may function as the frame 410 of the window 400.

For example, as illustrated in Fig. 15, in the movement path of the first cleaning unit 100, the right-downward ward section 510, where the first cleaning unit 100 horizontally moves from the top of the window which is close to the virtual frame Wvirtual to the left end of the window 400 and then keeps moving down to the right to the virtual frame Wvirtual, and the left-downward ward section 520 where the first cleaning unit 100 moves down to the left to the left end of the window 400 from the virtual frame Wvirtual may be alternately repeated.

After finishing cleaning any one of the left region 401 and the right region 402 of the window 400, the first cleaning unit 100 moves to the other region of the window 400.

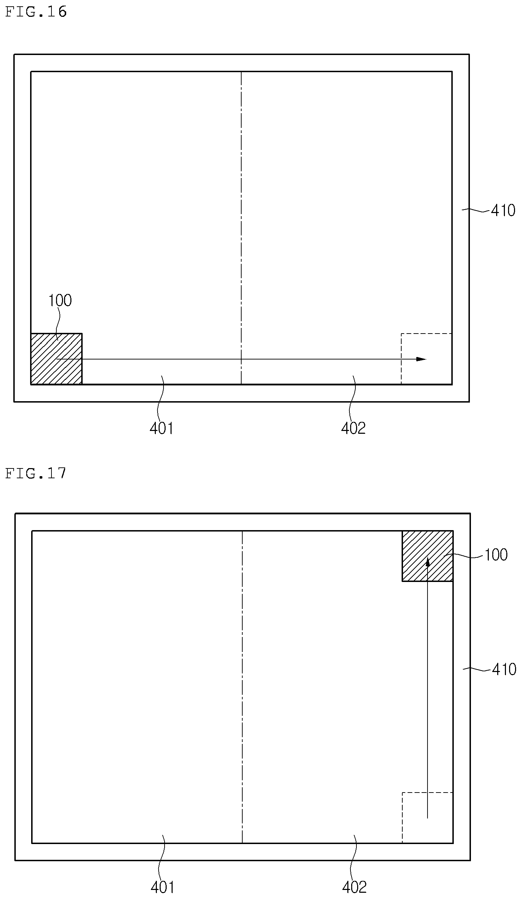

Referring to Fig. 16, after finishing cleaning the left region 401 of the window 400 along the movement path illustrated in Fig. 15, the first cleaning unit 100 may move to the right end of the window 400 along the bottom of the frame 410 of the window 400.

As the first cleaning unit 100 moves between the separate regions of the window 400 along the lower frame of the window 400, it is possible to prevent a trace or a mark from being generated by the movement of the first cleaning unit 100, in the regions that have cleaned.

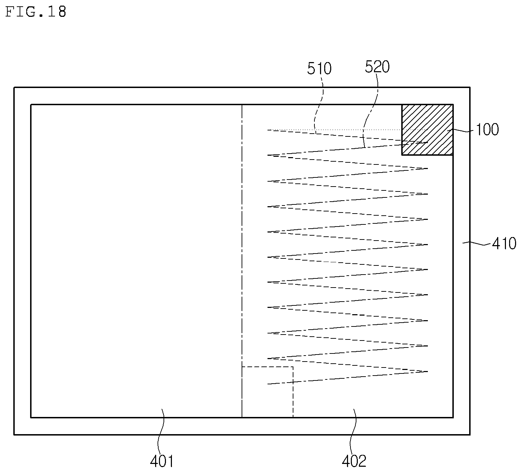

Referring to Figs. 17 and 18, may clean the window by moving along the right side 410 of the frame 410 from the bottom right end of the window 400 to the top right end of the window 400 and then moving to the right region 402 of the window 400.

In the movement path of the right region 402 of the window 400, the right-downward ward section 510, where the first cleaning unit 100 horizontally moves to the virtual frame Wvirtual from the top right end of the window 400 and then moves down to the right to the right end of the window 400 from the virtual frame, and the left-downward ward section 520 where the first cleaning unit 100 moves down to the left to the virtual frame from the right end of the window 400 may be alternately repeated.

Although an exemplary embodiment of the present invention was described by exemplifying that the window cleaning apparatus 100 moves to and clean the left region 401 first in the separate regions of the window 400, the present invention is not limited thereto.

For example, the window cleaning apparatus 10 may clean the region corresponding to the initial attachment position in the separate regions of the window 400 while moving, and then clean the other region while moving.

That is, when it is determined that the initial attachment position of the window cleaning apparatus 10 is at the right side by the method described with reference to Figs. 8 and 9, the first cleaning unit 100 may be configured to move to the right region 402 and cleans first the right region 402, and then moves to the right region 401 and clean the left region 401, after finishing cleaning the right region 402.

The movement pattern of the first cleaning unit 100 in the left region 401 and the right region 402 of the window 400 may be different from the patterns illustrated in Fig. 15 or Fig. 16, and the movement patterns in the left region 401 and the right region 402 may be different.

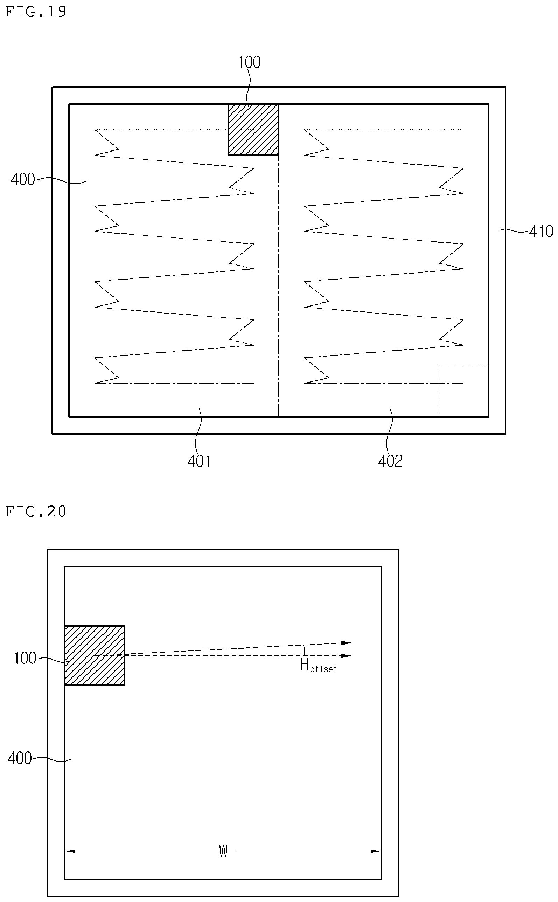

Referring to Fig. 19, the movement patterns of the first cleaning unit 100 in the left region 401 and the right region 402 of the window 400 may include the right section 530, the left section 540, and the gap-keeping section 535 which were described with reference to Fig. 14.

Further, the movement paths in a plurality of regions that divides the window 400, illustrated in Figs. 15 to 19, may be applied when the width w of the window 400 is larger than the second reference value, and may be used for a super-sized window having a width w over 2m, for example.

According to another exemplary embodiment of the present invention, it is possible to move the first cleaning unit 100 with vertical distances d that is constant regardless of the width w of the window 400, by adjusting the horizontal offset of the window cleaning apparatus 10.

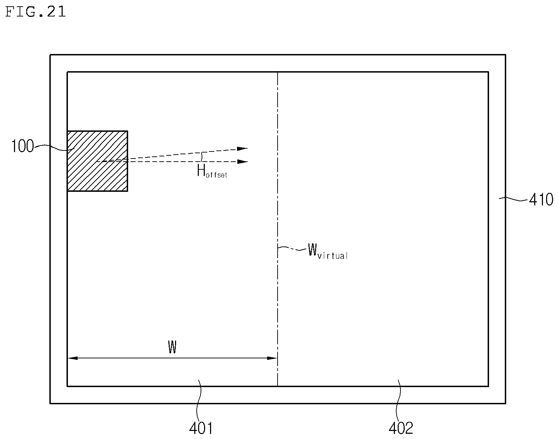

Figs. 20 and 21 are views illustrating methods of adjusting a horizontal offset of a window cleaning apparatus, according to exemplary embodiments.

Referring to Fig. 20, the control unit 310 of the window cleaning apparatus 10 may determine the upward offset angle $H_{offset}$, which is applied to horizontal movement, on the basis of the width 410 of the window 400.

For example, it is possible to allow the window cleaning apparatus 10 to clean the window 400 with constant vertical distances d while horizontally moving without sliding down, by calculating the upward offset angle $H_{offset}$ in consideration of the width w of the window 400 and a corresponding drop of the window cleaning apparatus 10, as in the following Formula 2.

[Formula 2]

$$H_{offset} = wl + A_{offset}$$

where w is the width of the window 400 and 1 is an upward angle for compensating a drop per the width 1m of the window 400.

That is, since the amount of sliding of the window cleaning apparatus 10 due to the gravity is proportioned to the horizontal movement distance, the control unit can adjust the upward offset angle $H_{offset}$ to be proportioned to the width w of the window 400, which is the amount of horizontal movement of the window cleaning apparatus 10.

As the control unit 310 adjusts the upward offset angle $H_{offset}$ by multiplying the width w of the window 400 by an upward angle 1 per 1m, it is possible to control the window cleaning apparatus 10 to horizontally move regardless of the width w of the window 400.

Further, $A_{offset}$ is an additional offset that is inputted by the user in Formula 2 and the upward offset angle $H_{offset}$ may be adjusted for each 0.5° by using a remote control device (not shown) that controls the operation of the window cleaning apparatus 10.

The user can adjust the upward offset angle $H_{offset}$ in accordance with the amount of actual sliding of the window cleaning apparatus 10, because the amount of sliding of the window cleaning apparatus 10 can be finely changed in accordance with the weather when the window cleaning apparatus is used, or the characteristics of the window 400

Further, the user can adjust the cleaning gap of the window cleaning apparatus 10 by controlling the upward offset angle $H_{offset}$, as described above.

Referring to Fig. 21, adjusting the upward offset angle $H_{offset}$ described above may be applied even when the window 400 is divided into a plurality of regions (for example, the left region 401 and the right region 402) and the regions are cleaned.

In this case, the width w may be a half the entire width of the window 400, for example, may means the distance from the right or left side of the frame of the window 400 to the virtual frame Wvirtual.

According to an exemplary embodiment of the present invention, the window cleaning apparatus 10 may decreases in movement speed, when coming closer to the frame 410 of the window 400 at a predetermined gap or less, such that it is possible to prevent damage to the window cleaning apparatus 10 and noise due to a shock, which may be generated when the window cleaning apparatus 10 collides with the frame 410.

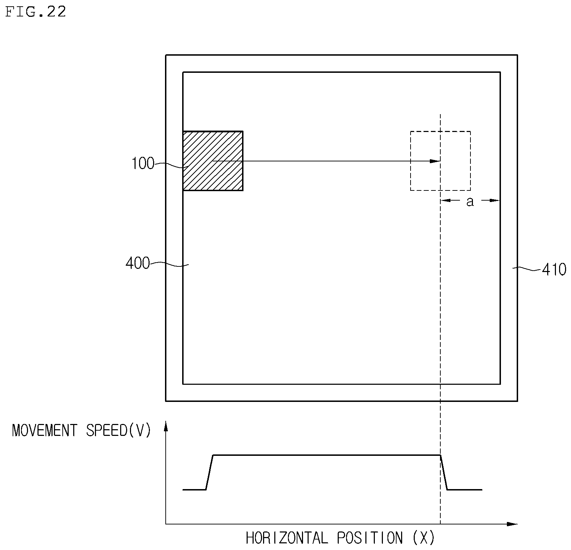

Figs. 22 is a view illustrating a method of controlling a movement speed of a window cleaning apparatus, according to an embodiment.

Referring to Fig. 22, when the first cleaning unit 100 passes a position spaced by a predetermined distance (a) from the right frame of the window 400 while moving right, the movement speed of the first cleaning unit 100 can be reduced to a predetermined value.

For example, when the first cleaning unit 100 moves right from the left end of the window 400 at a speed v1 and reaches a position spaced by 5 cm from the left end of the window 400, it is possible to move the first cleaning unit 100 to the right end of the window 400 by reducing the movement speed from v1 to v2 (for example, a half the v1).

Although the first cleaning unit 100 may be equipped with a sensor (not shown) to measure the distance to the frame 410 of the window 400, it is possible to determine the distance to the frame 410 on the basis of the movement distance measured by the amount of rotation of the first wheel members 120 of the first cleaning unit 100.

It is possible to reset the horizontal position X of the window cleaning apparatus 10 when the first cleaning unit 100 collides with the frame 410, in order to more accurately measure the distance to the frame 410.

For example, it is possible to initialize the horizontal position X of the window cleaning apparatus 10 to 0, when the first cleaning unit 100 collides with the left frame of the window 400, and to reset the horizontal position X of the window cleaning apparatus 10 to the width w of the window 400, when the first cleaning unit 100 collides with the right frame of the window 400.

Further, when the first cleaning unit 100 moves left from the right end of the window 400 at a speed v1 and reaches a position spaced by 5 cm from the right end of the window 400, it is possible to move the first cleaning unit 100 to the left end of the window 400 while reducing the movement speed from v1 to v2.

The method of controlling a movement speed of the window cleaning apparatus 10 may be applied even when the first cleaning unit 100 vertically move closer to the top or bottom frame of the window 400.

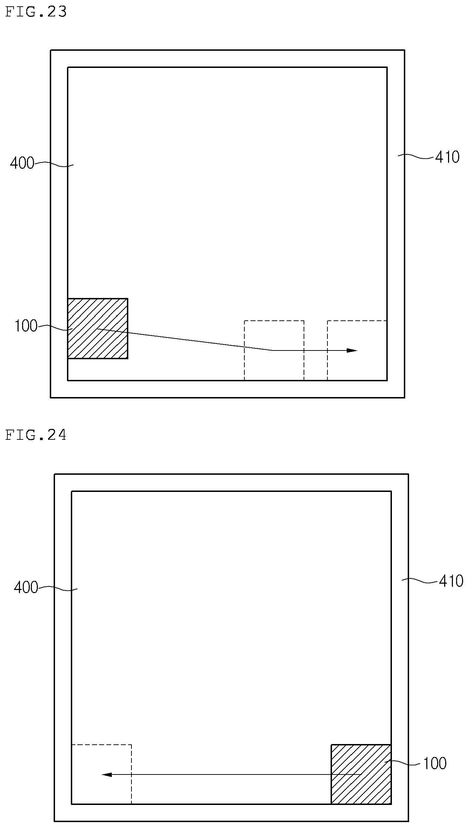

Figs. 23 and 24 are views illustrating a method of finishing cleaning of a window cleaning apparatus, according to an exemplary embodiment.

Referring to Fig. 23, cleaning the window may be finished, when the first cleaning unit 100 reaches the lower end of the window 400 while moving down to the left and right along the movement path determined on the basis of the width w of the window 400, as described above.

For example, when the shock-absorbing members collide and come in contact with the bottom of the frame 410, with the first cleaning unit 100 moving down to the right, it may be determined that the first cleaning unit 100 has moved to the lower end of the window.

In detail, when the lower shock-absorbing members of the first cleaning unit 100 collides with the frame 410 and it is sensed by the sensor that pressure is applied from below for a predetermined time, it may be recognized to the time to finish cleaning.

When the first cleaning unit 100 has moved to the lower end of the window and the time to finish cleaning is recognized, the first cleaning unit 100 may horizontally move right along the bottom of the frame 410 to the right end of the window 400, and the detergent in the second cleaning unit 200 may be ejected, when the first cleaning unit 100 starts to horizontally move right.

Referring to Fig. 24, the first cleaning unit 100 may horizontally move left to the left end of the window 400 along the bottom of the frame 410, after moving to the right end of the window 400.

The detergent that may flow down during cleaning and remain on the lower end of the window 400 can be completely removed by the left and right horizontal movement of the first cleaning unit 100 after the detergent is ejected. When the window cleaning apparatus 10 finishes cleaning, the window cleaning apparatus 10, in detail, the first cleaning unit 100 may move to a position where the user can easily detach the first cleaning unit 100, for example, a position close to the initial attachment position.

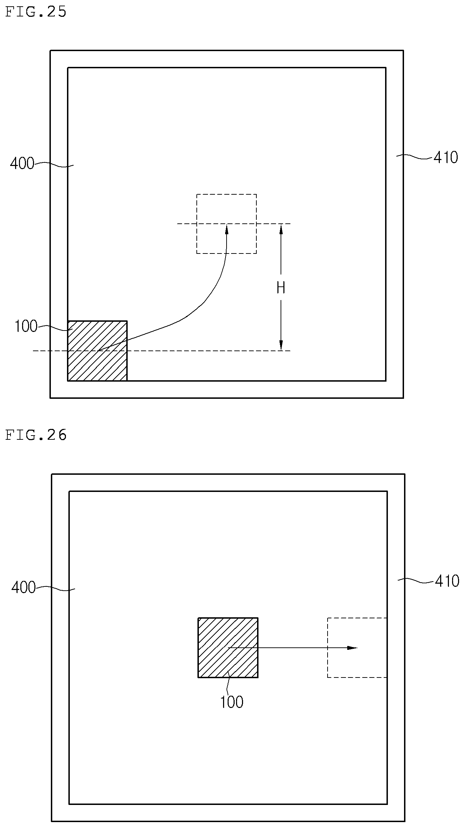

Figs. 25 to 27 are views illustrating a return path of a window cleaning apparatus after cleaning, according to an exemplary embodiment

Referring to Fig. 25, as illustrated in Fig. 24, when having moved to the left end of the window 400 and finishing cleaning, the first cleaning unit 100 may move up by a predetermined distance H.

For example, the first cleaning unit 100 may move up by the predetermined distance by moving up to the right while making a path similar to a parabola, after finishing cleaning.

When having moved to the right end of the window 400 and finishing cleaning, the first cleaning unit 100 may move up by the predetermined distance H by moving up to the left while making a path similar to a parabola.

The distance H over which the first cleaning unit 100 moves up after finishing cleaning may correspond to the vertical position where the user has attached the window cleaning apparatus, and for example, it may have a value corresponding to vertical initial attachment position measured when the window cleaning apparatus 10 is initially attached.

That is, as the first cleaning unit 100 moves up to the vertical initial attachment position H detected when the first cleaning unit 100 is attached, and stays at the position, the user can easily detach the window cleaning apparatus from the window.

Thereafter, the first cleaning unit 100 may move toward the end close to the detected initial attachment position of the window cleaning apparatus, in the left end and the right end of the window 400.

Referring to Fig. 26, when the window cleaning apparatus is initially attached at the right side on the window 400, the first cleaning unit 100 may horizontally move right to the right end of the window 400.

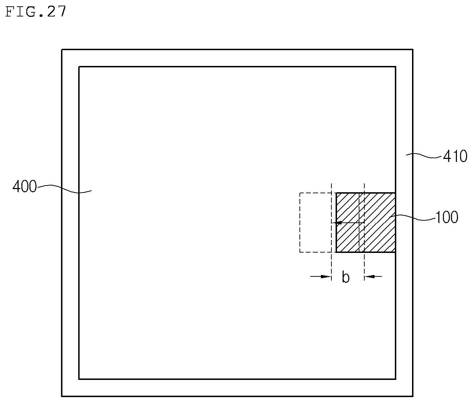

As illustrated in Fig. 27, the first cleaning unit 100 may move in the opposite direction, that is, to the left by a predetermined distance (b), after moving to the right end of the window 400.

As the first cleaning unit 100 stops at the predetermine position (b) from the right end of the window 400 after finishing cleaning, the user can easily detach the window cleaning apparatus. This is because it may be difficult to detach the window cleaning apparatus, when the window cleaning apparatus is in contact with the frame 410.

On the contrary, the window cleaning apparatus is initially attached at the left side on the window 400, the first cleaning unit 100 may move right by the predetermined distance (b) and then stop, after horizontally moving left to the left end of the window 400.

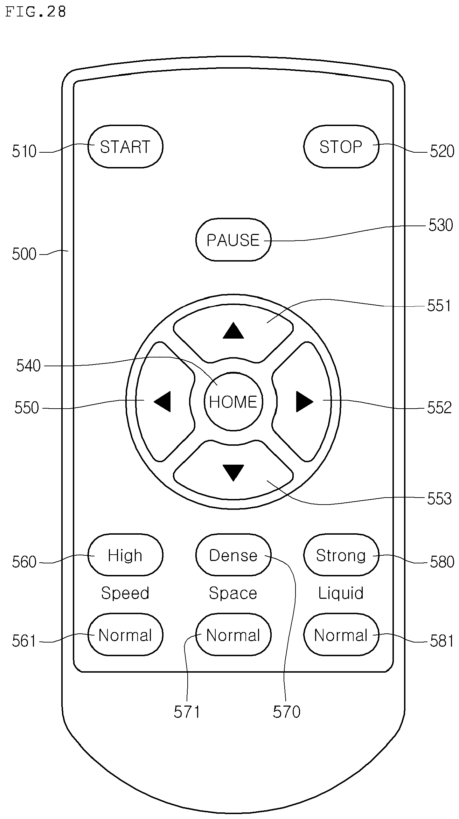

Fig. 28 is a view illustrating the configuration of a remote control device that controls a movement of a window cleaning apparatus, according to an exemplary embodiment.

Referring to Fig. 28, a user can start the window cleaning apparatus 10 cleans the window 400 by selecting the "START" button 510 of a remote control device 500, after attaching the window cleaning apparatus 10 to the window 400, and to stop of pause the cleaning by selecting the "STOP" button 520 or the "PAUSE" button 530 during the cleaning.

Further, the user can return the window cleaning apparatus 10 to the initial attachment position from the present position by selecting the "HOME" button 540 of the remote control device 500.

Further, the user can manually control the movement direction of the window cleaning apparatus 10, using the direction buttons 550 to 553 of the remote control device 500.

For example, when the user keeps pressing the right button 552 of the remote control device 500, the window cleaning apparatus 10 can move right from the present position until the window cleaning unit 10 collides with the right frame of the window 400.

Further, the user can control the movement speed of the window cleaning apparatus 10, using the speed buttons 560 and 561 of the remote control device 500.

That is, when the user presses the "High" button 560, the movement speed of the window cleaning apparatus 10 increases, and when the user presses the "Normal" button 561, the movement speed of the window cleaning apparatus 10 decreases.

For example, the movement speed of the window cleaning apparatus 10 may be set to a default of 8 cm/sec, the movement speed may be increased by 0.5 cm/sec, every time the user presses the "High" button 560, and the maximum adjustable speed may be set to 10 cm/sec.

Further, the movement speed may decrease by 0.5 cm/sec, every time the user presses the "Normal" button 561, and the minimum adjustable speed may be set to 6 cm/sec.

Further, the user can control the cleaning gap of the window cleaning apparatus 10, using the gap buttons 570 and 571 of the remote control device 500.

That is, when the user presses the "Dense" button 570, the cleaning gap of the window cleaning apparatus 10 may decrease, and when the user presses the "Normal" button 571, the cleaning gap of the window cleaning apparatus 10 may increase.

For example, the movement angle of the window cleaning apparatus 10 may decrease by 0.5° and the cleaning gap may decrease, every time the user presses the "Dense" button 570, in which the maximum adjustable angle may be set to 3°.

Further, the movement angle may increase by 0.5°, every time the user presses the "Normal" button 571, and the minimum adjustable angle may be set to -3°.

Further, the user can control the amount of detergent ejected from the window cleaning apparatus 10, using the ejection buttons 580 and 581 of the remote control device 500.

That is, when the user presses the "Strong" button 580, the detergent ejection interval of the window cleaning apparatus 10 may decrease, and when the user presses the "Normal" button 581, the detergent ejection interval may increase.

For example, the window cleaning apparatus 10 may be basically set to eject a detergent for 60 msec at an interval of 4.8 sec and the detergent ejection interval of the window cleaning apparatus 10 may decrease by 1 sec, every time the user presses the "Strong" button 580, such that more detergent may be ejected.

On the other hand, when the user presses the "Normal" button 581, the detergent ejection time may decrease from 60 msec to 20 msec.

Although the method of controlling the movement of the window cleaning apparatus including the first and second cleaning units 100 and 200 respectively attached on the inner and outer sides of the window by the magnetic force is described as an example, the present invention is not limited thereto, and for example, the method may be applied to a window cleaning apparatus which is attached to one of the inner and outer sides of the window 400 or a window cleaning apparatus attached to the window 400 by vacuum absorption, not the magnetic force.

Further, the method for controlling the window cleaning apparatus according to the exemplary embodiments may be programmed to be executed in a computer and stored in a computer-readable recording medium such as a ROM, a RAM, a CD-ROM, a magnetic tape, a floppy disk, an optical data storage device, and a carrier wave (such as data transmission through the Internet).

The computer-readable recording mediums may be distributed to a computer system that is connected through a network and may store and execute computer-readable codes in the type of distribution. Further, functional programs, codes, and code segments for implementing the control method may be easily inferred by programmers in the art.

Although the present invention was described above with reference to the exemplary embodiments, the exemplary embodiments are only examples and do not limit the present invention.

For example, the components described in detail in the exemplary embodiments of the present invention may be modified. Further, differences relating to the changes and modifications should be construed as being included in the scope of the present invention which is determined by claims.

**Claims**

1. A method of controlling a movement of a window cleaning apparatus (10) that is attached and moved on a window, the method comprising:

    (S2) determining a movement path of the window cleaning apparatus on the basis of the width of a window; and
    (S3) cleaning the window while moving the window cleaning apparatus along the determined movement path

    **characterized in that**
    the determining of a movement path includes:

    comparing the width of the window with a reference value; and
    setting the movement path of the window cleaning apparatus to be different in accordance with the compared result.

2. The method of claim 1, further comprising (S1) measuring the width of the window by moving the window cleaning apparatus (10) to the left and right.

3. The method of claim 1, wherein the movement path includes a right-downwardward section (510) where the window cleaning apparatus (10) is moved down to the right and a left-downwardward section (520) where the window cleaning apparatus (10) is moved down to the left.

4. The method of claim 41, wherein when the width of the window is larger than the reference value, the movement path includes a right-downwardward section (510) where the window cleaning apparatus is moved down to the right, a left-downwardward section (520) where the window cleaning apparatus (10) is moved down to the left, and an upward section where the window cleaning apparatus is moved up in one direction of the right and left.

5. The method of claim 4, wherein a movement time of the upward section gradually increases, as the width of the window increases.

6. The method of claim 5, wherein the movement time of the upward section increases in proportion to the difference between the width of the window and the reference value.

7. The method of claim 1, wherein when the width of the window is larger than the reference value, the movement path includes a series of a right-downwardward section where the window cleaning apparatus (10) is moved down to the right, a left-upwardward section where the window cleaning apparatus is moved up to the left, and a left-downwardward section where the window cleaning apparatus (10) is moved down to the left.

8. The method of claim 1, wherein when the width of the window is a value between a first reference value and a second reference value, the movement path includes a right section where the window cleaning apparatus (10) is horizontally moved to the right end of the window, a left section where the window cleaning apparatus is moved to the left end of the window, and a gap-keeping section where the window cleaning apparatus (10) is move away from the right or left end of the window to a predetermined distance and then returned to the end.

9. The method of claim 1, wherein when the width of the window is larger than the second reference value, the movement path divides the window into two or more regions and the window cleaning apparatus is moved to the divided regions.

10. The method of claim 9, wherein the movement path includes a left movement path for cleaning the left region of the window and a right movement path for cleaning the right region of the window.

11. The method of claim 1, wherein the determining of a movement path includes determining an upward offset angle, which is applied when the window cleaning apparatus (10) horizontally moves, on the basis of the width of the window.

12. A window cleaning apparatus (10) that is attached and moved on a window (400), comprising a first cleaning unit (100) and a second cleaning unit (200) that are respectively attached to the inner side and the outer side of a window (400) by a magnetic force and moved on the sides,
    wherein at least one of the first and second cleaning units (100, 200) includes a control unit (310) that determines a movement path of the window cleaning apparatus (10) on the basis of the width of the window (400) and allows the window cleaning apparatus (10) to move along the determined movement path,
    **characterized in that**
    when the width of the window (400) is a value between a first reference value and a second reference value, the movement path includes a right section where the window cleaning apparatus is horizontally moved to the right end of the window, a left section where the window cleaning apparatus (10) is moved to the left end of the window, and a gap-keeping section where the window cleaning apparatus (10) is move away from the right or left end of the window to a predetermined distance and then returned to the end.

**13.** The window cleaning apparatus of claim 12, wherein when the width of the window is larger than a second reference value, the movement path includes a left movement path for cleaning the left region of the window, a right movement path for cleaning the right region of the window, and a transition section for moving from a first region to a second region after cleaning the first region in the left and right regions of the window.

**Patentansprüche**

**1.** Verfahren zum Steuern einer Bewegung einer Fensterreinigungsvorrichtung (10), welche an einem Fenster befestigt ist und auf diesem bewegt wird, das Verfahren aufweisend:

(S2) Ermitteln eines Bewegungspfads der Fensterreinigungsvorrichtung basierend auf der Breite eines Fensters; und
(S3) Reinigen des Fensters, während sich die Fensterreinigungsvorrichtung entlang des ermittelten Bewegungspfades bewegt

**dadurch gekennzeichnet, dass**
das Ermitteln eines Bewegungspfades umfasst:

Vergleichen der Breite des Fensters mit einem Referenzwert; und
unterschiedliches Festlegen des Bewegungspfades der Fensterreinigungsvorrichtung in Übereinstimmung mit dem Ergebnis des Vergleichs.

**2.** Verfahren nach Anspruch 1, weiter aufweisend (S1) ein Messen der Breite des Fensters durch Bewegen der Fensterreinigungsvorrichtung (10) nach links und rechts.

**3.** Verfahren nach Anspruch 1, wobei der Bewegungspfad einen nach rechts-unten gerichteten Abschnitt (510) umfasst, in dem die Fensterreinigungsvorrichtung nach rechts unten bewegt wird, und einen nach links-unten gerichteten Abschnitt (520) umfasst, in dem die Fensterreinigungsvorrichtung (10) nach links unten bewegt wird.

**4.** Verfahren nach Anspruch 1, wobei, wenn die Breite des Fensters größer als der Referenzwert ist, der Bewegungspfad einen nach rechts-unten gerichteten Abschnitt (510) umfasst, in dem die Fensterreinigungsvorrichtung nach rechts unten bewegt wird, einen nach links-unten gerichteten Abschnitt (250) umfasst, in dem die Fensterreinigungsvorrichtung (10) nach links unten bewegt wird, und einen nach oben gerichteten Abschnitt umfasst, in dem die Fensterreinigungsvorrichtung in eine Richtung von rechts oder links nach oben bewegt wird.

**5.** Verfahren nach Anspruch 4, wobei eine Bewegungsdauer das nach oben gerichteten Abschnittes graduell zunimmt, wenn die Breite des Fensters zunimmt.

**6.** Verfahren nach Anspruch 5, bei die Bewegungsdauer des nach oben gerichteten Abschnittes proportional zu dem Unterschied zwischen der Breite des Fensters und dem Referenzwert zunimmt.

**7.** Verfahren nach Anspruch 1, wobei wenn die Breite des Fensters größer als der Referenzwert ist, der Bewegungspfad eine Serie von nach rechts-unten gerichteten Abschnitten, in welchen die Fensterreinigungsvorrichtung (10) nach rechts unten bewegt wird, einen nach links-oben gerichteten Abschnitt, in welchem die Fensterreinigungsvorrichtung nach links oben bewegt wird, und einen nach links-unten gerichteten Abschnitt, in welchem die Fensterreinigungsvorrichtung (10) nach links unten bewegt wird, umfasst.

**8.** Verfahren nach Anspruch 1, wobei wenn die Breite des Fensters ein Wert zwischen einem ersten Referenzwert und einem zweiten Referenzwert ist, der Bewegungspfad einen rechten Abschnitt, in welchem die Fensterreinigungsvorrichtung (10) horizontal an das rechte Ende des Fensters bewegt wird, einen linken Abschnitt, in welchem die Fensterreinigungsvorrichtung zu dem linken Ende des Fensters bewegt wird, und einen Lücken-schließenden Abschnitt, in welchem die Fensterreinigungsvorrichtung (10) weg von dem rechten oder linken Ende des Fensters um einen vorgegebenen Abstand weg bewegt wird, und dann zu dem Ende zurückgekehrt.

**9.** Verfahren nach Anspruch 1, wobei, wenn die Breite des Fensters größer als der zweite Referenzwert ist, der Bewegungspfad das Fenster in zwei oder mehr Bereiche aufteilt, und die Fensterreinigungsvorrichtung in den aufgeteilten Bereich bewegt wird.

**10.** Verfahren Anspruch 9, wobei der Bewegungspfad einen linken Bewegungspfad zum Reinigen des linken Bereichs des Fensters und einen rechten Bewegungspfad zum Reinigen des rechten Bereichs des Fensters umfasst.

**11.** Verfahren Anspruch 1, wobei die Ermittlung eines Bewegungspfades ein Ermitteln eines nach oben gerichteten Offset-Winkels auf der Basis der Breite des Fensters umfasst, welcher angewendet wird, wenn sich die Fensterreinigungsvorrichtungen (10) horizontal bewegt.

**12.** Fensterreinigungsvorrichtungen (10), welche an einem Fenster (400) befestigt ist und auf diesem bewegt wird, aufweisend eine erste Reinigungseinheit (100) und eine zweite Reinigungseinheit (200), welche jeweils durch Magnetkraft auf der Innenseite und der Außenseiter eines Fensters (400) befestigt sind und sich auf diesen Seiten bewegen,

wobei wenigstens eine von der ersten und zweiten Reinigungseinheit (100, 200) eine Steuereinheit (310) umfasst, welche einen Bewegungspfad der Fensterreinigungsvorrichtung (10) auf der Basis der Breite des Fensters (400) ermittelt, und es der Fensterreinigungsvorrichtung (10) erlaubt, sich entlang des ermittelten Bewegungspfad zu bewegen, **dadurch gekennzeichnet, dass**

wenn die Breite des Fensters (400) ein Wert zwischen einem ersten Referenzwert und einem zweiten Referenzwert ist, der Bewegungspfad einen rechten Abschnitt umfasst, in welchem die Fensterreinigungsvorrichtung horizontal zu dem rechten Ende des Fensters bewegt wird, einen linken Abschnitt umfasst, in welchem die Fensterreinigungsvorrichtung (10) zu dem linken Ende des Fensters belegt wird, und einen Lücken-schließenden Abschnitt umfasst, in welchem die Fensterreinigungsvorrichtung (10) von dem linken oder rechten Endes des Fensters zu einem vorgegebenen Abstand weg bewegt wird, und dann zu dem Ende zurückgekehrt.

13. Fensterreinigungsvorrichtung nach Anspruch 12, wobei, wenn die Breite des Fensters größer als ein zweite Referenzwert ist, der Bewegungspfad einen linken Bewegungspfad zum Reinigen des linken Bereichs des Fensters, einen rechten Bewegungspfad zum Reinigen des rechten Bereichs des Fensters und einen Übergangsbereich zum Bewegen von dem ersten Bereich zu dem zweiten Bereich nach dem Reinigen des ersten Bereichs von den linken und rechten Bereichen des Fensters umfasst.

## Revendications

1. Procédé de commande d'un déplacement d'un appareil de nettoyage de vitre (10) qui est fixé et déplacé sur une vitre, le procédé comprenant :

    (S2) déterminer un trajet de déplacement de l'appareil de net-toyage de vitre sur la base de la largeur d'une vitre ; et
    (S3) nettoyer la vitre tout en déplaçant l'appareil de nettoyage de vitre le long du trajet de déplacement déterminé

    **caractérisé en ce que**
    la détermination d'un trajet de déplacement inclut :

        comparer la largeur de la vitre à une valeur de référence ; et

        régler le trajet de déplacement de l'appareil de nettoyage de vitre pour qu'il soit différent en fonction du résultat de la comparaison.

2. Procédé selon la revendication 1, comprenant en outre (S1) de mesurer la largeur de la vitre en déplaçant l'appareil de nettoyage de vitre (10) vers la gauche et vers la droite.

3. Procédé selon la revendication 1, dans lequel le trajet de déplacement inclut une partie de descente à droite (510) où l'appareil de nettoyage de vitre (10) est déplacé vers le bas à droite et une partie de descente à gauche (520) où l'appareil de nettoyage de vitre (10) est déplacé vers le bas à gauche.

4. Procédé selon la revendication 1, dans lequel lorsque la largeur de la vitre est supérieure à la valeur de référence, le trajet de déplacement inclut une partie de descente à droite (510) où l'appareil de nettoyage de vitre est déplacé vers le bas à droite, une partie de descente à gauche (520) où l'appareil de nettoyage de vitre (10) est déplacé vers le bas à gauche, et une partie vers le haut où l'appareil de nettoyage de vitre est déplacé vers le haut dans une direction parmi la droite et la gauche.

5. Procédé selon la revendication 4, dans lequel un temps de déplacement de la partie vers le haut augmente graduellement, lorsque la largeur de la vitre augmente.

6. Procédé selon la revendication 5, dans lequel le temps de déplacement de la partie vers le haut augmente proportionnellement à la différence entre la largeur de la vitre et la valeur de référence.

7. Procédé selon la revendication 1, dans lequel lorsque la largeur de la vitre est supérieure à la valeur de référence, le trajet de déplacement inclut une série d'une partie de descente à droite où l'appareil de nettoyage de vitre (10) est déplacé vers le bas à droite, une partie vers le haut à gauche où l'appareil de nettoyage de vitre est déplacé vers le haut à gauche, et une partie de descente à gauche où l'appareil de nettoyage de vitre (10) est déplacé vers le bas à gauche.

8. Procédé selon la revendication 1, dans lequel lorsque la largeur de la vitre est une valeur entre une première valeur de référence et une seconde valeur de référence, le trajet de déplacement inclut une partie droite où l'appareil de nettoyage de vitre (10) est déplacé horizontalement jusqu'à l'extrémité droite de la vitre, une partie gauche où l'appareil de nettoyage de vitre est déplacé jusqu'à l'extrémité gauche de la vitre, et une partie de conservation d'écartement où l'appareil de nettoyage de vitre (10) est éloigné de l'extrémité droite ou gauche de la vitre jusqu'à une distance prédéterminée et est ensuite renvoyé vers l'extrémité.

9. Procédé selon la revendication 1, dans lequel lorsque la largeur de la vitre est supérieure à la seconde valeur de référence, le trajet de déplacement divise la vitre en deux ou plus de deux régions et l'appareil de nettoyage de vitre est déplacé jusqu'aux régions divisées.

10. Procédé selon la revendication 9, dans lequel le trajet de déplacement inclut un trajet de déplacement à gauche pour nettoyer la région gauche de la vitre et un trajet de déplacement à droite pour nettoyer la région droite de la vitre.

11. Procédé selon la revendication 1, dans lequel la détermi-nation d'un trajet de déplacement inclut la détermination d'un angle de décalage vers le haut, qui est appliqué lorsque l'appareil de nettoyage de vitre (10) se déplace horizontalement, sur la base de la largeur de la vitre.

12. Appareil de nettoyage de vitre (10) qui est fixé et déplacé sur une vitre (400), comprenant une première unité de nettoyage (100) et une seconde unité de nettoyage (200) qui sont respectivement fixées au côté intérieur et au côté extérieur d'une vitre (400) par une force magnétique et déplacées sur les côtés, dans lequel au moins l'une des première et seconde unités de nettoyage (100, 200) inclut une unité de commande (310) qui détermine un trajet de déplacement de l'appareil de nettoyage de vitre (10) sur la base de la largeur de la vitre (400) et permet à l'appareil de nettoyage de vitre (10) de se déplacer le long du trajet de déplacement déterminé,
**caractérisé en ce que**
lorsque la largeur de la vitre (400) est une valeur entre une première valeur de référence et une seconde valeur de référence, le trajet de déplacement inclut une partie droite où l'appareil de nettoyage de vitre est déplacé horizontalement jusqu'à l'extrémité droite de la vitre, une partie gauche où l'appareil de nettoyage de vitre (10) est déplacé jusqu'à l'extrémité gauche de la vitre, et une partie de conservation d'écartement où l'appareil de nettoyage de vitre (10) est éloigné de l'extrémité droite ou gauche de la vitre jusqu'à une distance prédéterminée et est ensuite renvoyé vers l'extrémité.

13. Appareil de nettoyage de vitre selon la revendication 12, dans lequel lorsque la largeur de la vitre est supérieure à une seconde valeur de référence, le trajet de déplacement inclut un trajet de déplacement à gauche pour nettoyer la région gauche de la vitre, un trajet de déplacement à droite pour nettoyer la région droite de la vitre, et une partie de transition pour passer d'une première région à une seconde région après avoir nettoyé la première région dans les régions gauche et droite de la vitre.

FIG.1

FIG.2

FIG.3

FIG.4

START

MEASURE WIDTH OF WINDOW —S1

DETERMINE MOVEMENT PATH ON THE BASIS
OF MEASURED WIDTH OF WINDOW —S2

MOVE WINDOW CLEANING APPARATUS ALONG
DETERMINED MOVEMENT PATH —S3

END

FIG.5

FIG.6

FIG.7

FIG.8

FIG.9

FIG.10

FIG.11

FIG.12

FIG.13

FIG.14

FIG.15

FIG.16

FIG.17

FIG.18

FIG.19

100

400

410

401

402

FIG.20

100

400

$H_{offset}$

W

FIG.21

FIG.22

FIG.23

FIG.24

FIG.25

FIG.26

FIG.27

FIG.28

**EP 2 572 617 B1**

**Patent documents cited in the description**

- DE 10245522 C1
- DE 19928869 A1